# EUROPÄISCHE PATENTSCHRIFT

(11) **EP 0 996 531 B1**
(45) Veröffentlichungstag und Bekanntmachung des Hinweises auf die Patenterteilung: **19.06.2002**
(21) Anmeldenummer: 99923476.8
(22) Anmeldetag: 28.04.1999
(51) Int. Cl.: B29C 49/80

(54) **VORRICHTUNG UND VERFAHREN ZUR HERSTELLUNG VON KUNSTSTOFFHOHLKÖRPERN**
METHOD AND DEVICE FOR PRODUCING PLASTIC HOLLOW BODIES
PROCEDE ET DISPOSITIF POUR PRODUIRE DES CORPS CREUX EN MATIERE PLASTIQUE

(30) Priorität: 12.05.1998 DE 19821105
(43) Veröffentlichungstag der Anmeldung: 03.05.2000
(73) Patentinhaber: KRONES AG, 93068 Neutraubling (DE)
(72) Erfinder: WINTER, Horst, D-93073 Neutraubling (DE)
(86) Internationale Anmeldenummer: EP9902863
(87) Internationale Veröffentlichungsnummer: WO9958315

(56) Entgegenhaltungen:
- DE-A- 19 737 527
- US-A- 4 693 375
- PATENT ABSTRACTS OF JAPAN vol. 014, no. 186 (M-0962), 16. April 1990 (1990-04-16) -& JP 02 034322 A (TOYO SEIKAN KAISHA LTD), 5. Februar 1990 (1990-02-05)

## Beschreibung

Die Erfindung betrifft eine Vorrichtung zur Herstellung von Kunststoffhohlkörpern, insbesondere streckgeblasenen Kunststoffflaschen, mit einer Transportbahn, entlang der Kunststoffrohlinge in Reihe an zumindest einer Inspektionsstation vorbei zu einer Formstation zum Ausformen der Rohlinge auf eine gewünschte Form transportiert werden, gemäß dem Oberbegriff des Anspruchs 1 und ein Verfahren zur Herstellung von Kunststoffhohlkörpern gemäß dem Oberbegriff des Anspruchs 24.

Eine gattungsgemäße Vorrichtung und ein gattungsgemäßes Verfahren sind aus der Praxis bekannt. Speziell bei der Herstellung von Kunststoffflaschen, insbesondere PET-Flaschen, ist es üblich, sogen. Vorformlinge (Rohlinge) aus Kunststoff aus einem Speicher zur einer Formstation zu führen. Eine solche Formstation umfaßt z.B. eine Heizvorrichtung, in der Rohlinge auf die für einen nachfolgenden Streckblasvorgang erforderliche Temperatur aufgeheizt werden. Im nachfolgenden Streckblasvorgang wird dann die Flasche mit ihrer endgültigen Form erzeugt.

Gelangt jedoch ein Rohling mit Herstellungsfehlern in die Heizvorrichtung bzw. in die Streckblaseinrichtung, so kann es dort zu Störungen des Betriebsablaufes kommen. Ist z.B. der Öffnungsbereich eines Rohlings verletzt, so kann es während des Streckblasvorganges zu Undichtigkeiten kommen. Man hat daher die Rohlinge schon an einer Inspektionsstation in Form eines Dornenrades vorbeibewegt. Dieses Dornenrad taucht mit einzelnen Dornen in die Mündung eines Rohlings ein und tastet diesen mechanisch ab, um dabei gewisse Fehler im Mündungsbereich feststellen zu können. Bei einem festgestellten Fehler wird die Maschine gestoppt und eine Bedienungsperson muß den defekten Rohling entfernen. Es ist dementsprechend die Anwesenheit einer Bedienungsperson erforderlich und es können leistungsmindernde Stillstandszeiten der Maschine auftreten. Zudem besteht die Gefahr, daß durch den Eingriff des Dornenrades die Kunststoffrohlinge verletzt werden.

Aufgabe der Erfindung ist es daher, eine gattungsgemäße Vorrichtung und ein gattungsgemäßes Verfahren derart weiterzuentwickeln, daß solche Nachteile nicht auftreten.

Diese Aufgabe wird erfindungsgemäß mit einer gattungsgemäßen Vorrichtung, die die Merkmale des kennzeichnenden Teiles des Anspruchs 1 aufweist, und ein gattungsgemäßes Verfahren, das die Merkmale des kennzeichnenden Teiles des Anspruchs 24 aufweist, gelöst.

Zweckmäßige Weiterbildungen der erfindung sind Gegenstand der abhängigen Ansprüche.

Erfindungsgemäß weist die Vorrichtung einen Aussonderungsbereich auf, in dem die Rohlinge derart geführt werden, daß sie lose an nur einer Seite unterstützt werden, und in dem ein Aussonderungsmittel vorgesehen ist, das auf Signale der Inspektionsstation hin als fehlerhaft erkannte Kunststoffrohlinge aus der Reihe bewegt.

Während sich die Rohlinge also durch den Aussonderungsbereich bewegen, werden sie nur an einer Seite lose unterstützt. Das Aussonderungsmittel kann so auf einfache Weise einen von der Inspektionsstation als fehlerhaft erkannten Kunststoffrohling aus der Reihe bewegen. Dadurch, daß die Rohlinge im Aussonderungsbereich nur lose unterstützt sind, müssen dazu keine großen Kräfte oder Spannungen überwunden werden. Eine Bedienperson ist nicht mehr erforderlich und der Aussonderungsvorgang kann im laufenden Betrieb geschehen. Eine Unterbrechung der Produktion ist nicht notwendig.

In vorteilhafter Ausgestaltung ist eine kulissenartige Führung vorgesehen, die die Kunststoffrohlinge im Aussonderungsbereich in verschwenkter Stellung führt. Eine solche verschwenkte Stellung ermöglicht auf einfache Weise, daß die Kunststoffrohlinge im Aussonderungsbereich nur auf einer Seite unterstützt und trotzdem exakt geführt werden.

Die Verschwenkung kann dabei jeden beliebigen Wert annehmen, der ausreicht, daß die Kunststoffrohlinge in der verschwenkten Stellung verbleiben. Als besonders vorteilhaft hat sich ein Wert von ca. 50° erwiesen gegenüber einer in Transportrichtung verlaufenden Vertikalebene.

Die erfindungsgemäße Vorrichtung ist besonders zum Einsatz mit Kunststoffrohlingen geeignet, die einen Kragen im Öffnungsbereich aufweisen. Derartige Kunststoffrohlinge werden z.B. zur Herstellung von PET-Kunststoffflaschen eingesetzt. Ein solcher Kragen oder Halsring ist ein Bereich entlang des Kunststoffrohlings, der einen größeren Durchmesser hat, so daß der Rohling an diesem Kragen hängend transportiert werden kann. Bei einer vorteilhaften Ausgestaltung der erfindungsgemäßen Vorrichtung umfaßt die kulissenartige Führung dazu eine Führungskante zum Untergreifen des Kragens der Kunststoffrohlinge.

Im Aussonderungsbereich kann die verschwenkte Haltung der Kunststoffrohlinge z.B. durch eine Fläche erzeugt werden, an der die Kunststoffrohlinge in verschwenkter Haltung anliegen. In einer anderen Ausführungsform ist eine Führungsschiene vorgesehen, die im unteren Bereich der Kunststoffrohlinge angreift, um diese zu der verschwenkten Haltung zu bewegen.

Die Kunststoffrohlinge können entlang der gesamten Transportbahn in einseitig unterstützter verschwenkter Haltung geführt werden. Eine besonders platzsparende und sichere Transportmethode umfaßt jedoch Führungsschienen, die die Kunststoffrohlinge von zwei Seiten an ihrem Kragen unterstützen. Im Aussonderungsbereich, in dem die Rohlinge in verschwenkter Haltung geführt werden, ist eine dieser Führungsschienen unterbrochen, um ein Aussondern eines defekten Kunststoffrohlinges zu ermöglichen. Durch die verschwenkte bzw. geneigte Haltung im Aussonderungsbereich ist auch bei unterbrochener Führungsschiene auf der Aussonderungsseite eine sichere Führung gewährleistet.

Werden die Kunststoffrohlinge in Bereichen außerhalb des Aussonderungsbereiches in im wesentlichen senkrechter, d.h. in einer Vertikalebene liegenden Haltung transportiert, so ist die kulissenartige Führung derart ausgestaltet, daß die Kunststoffrohlinge zu Beginn des Aussonderungsbereiches in die verschwenkte Haltung geführt werden. Bei einer Ausgestaltung, bei welcher die kulissenartige Führung durch eine Fläche gebildet wird, ist diese entsprechend gebogen. Wird die kulissenartige Führung z.B. durch obere und untere Führungsschienen gebildet, so sind diese in der Art gewendelt, daß sie die Kunststoffrohlinge bei ihrer Bewegung entlang der Transportbahn aus ihrer im wesentlichen senkrechten Haltung in die verschwenkte Haltung überführen.

Erfindungsgemäße Führungsschienen können verschiedene Formen aufweisen. Besonders vorteilhaft ist es jedoch, wenn die Führungsschienen Anlageflächen aufweisen, die an die Form der Kragen und Seitenflächen der Kunststoffrohlinge angepaßt sind. Derartige Anlageflächen sind vorteilhafterweise derart verwunden, daß sie der Verschwenkungsbewegung der Kunststoffrohlinge folgen. Auf diese Weise ist eine besonders sichere Führung gewährleistet.

Die Aussonderungsmittel können auf verschiedene Weise realisiert werden. So kann z.B. ein Mechanismus vorgesehen sein, der auf ein Signal der Inspektionsstation hin die lose Unterstützung des als defekt erkannten Kunststoffrohlinges unterbricht, so daß dieser nach unten wegfällt. Besonders einfach ist jedoch ein Pusher, der auf ein Fehlersignal der mindestens einen Inspektionsstation hin einem Kunststoffrohling einen seitlichen Stoß gibt, daß dessen Kragen außer Eingriff mit der Führungskante kommt. Das Lösen des Eingriffes mit der Führungskante bewirkt, daß der als defekt erkannte Kunststoffrohling abrutscht und in einen ggf. vorgesehenen Aussonderungsbehälter fällt. Eine solche Ausgestaltung gewährleistet, daß die benachbarten Kunststoffrohlinge bei dem Aussonderungsvorgang nicht beeinflußt werden. Der seitliche Stoß kann an der Seitenfläche des Kunststoffrohlings oder im Öffnungsbereich erfolgen.

Der Pusher kann aus einem einfachen Stößel bestehen. Ebenso kann vorgesehen sein, daß die Fläche des Pushers, die während des Aussonderungsvorganges den Rohling berührt, an dessen Außenform angepaßt ist. Eine einfache Ausgestaltung sieht vor, daß der Pusher eine prismatische Fläche umfaßt, die sich konkav gegenüber dem auszusondernden Rohling öffnet. Eine solche prismatische Fläche ist leicht herzustellen und führt zu einer Zentrierung des Rohlings während des Aussonderungsvorganges.

Die Inspektionsstation kann direkt im Aussonderungsbereich angeordnet sein und das Aussonderungsmittel direkt ansteuern. Eine genauere Untersuchung ist möglich, wenn die Inspektionsstation stromaufwärts des Aussonderungsbereiches angeordnet ist und ein zeitverzögertes Signal an die Aussonderungsmittel gibt, wobei die Zeitverzögerung der Zeitdauer entspricht, die ein Kunststoffrohling von der Inspektionsstation zu dem Aussonderungsmittel benötigt.

Mit einer solchen Anordnung können auch mehrere Inspektionsstationen nacheinander zur Überprüfung verschiedener Parameter der Kunststoffrohlinge, z.B. auch der Seitenflächen, angeordnet werden.

Eine Zeitverzögerung zwischen Inspektion und Aussonderung kann einen festgelegten Wert aufweisen. In einer Weiterbildung ist jedoch eine Einrichtung vorgesehen, mit deren Hilfe eine Überwachung des Weges zwischen der Inspektionsstation und der Aussonderungsstation möglich ist, so daß auch bei verschiedenen Transportgeschwindigkeiten eine Aussonderung des richtigen Kunststoffrohlinges gewährleistet ist. Eine solche Einrichtung kann z.B. eine Mehrfachlichtschranke umfassen, an der die Kunststoffrohlinge vorbeigeführt werden.

Die Kunststoffrohlinge können entlang der Transportbahn mit Hilfe von Antriebsmechanismen fortbewegt werden. Eine einfache Realisierung umfaßt eine in Transportrichtung geneigte Transportbahn, so daß die Kunststoffrohlinge durch ihr Eigengewicht entlang der Transportbahn bewegt werden.

Um eine sichere Inspektion durch die Inspektionseinrichtung zu gewährleisten, kann im Bereich der Inspektion ein Antriebsmechanismus vorgesehen sein, der eine definierte Geschwindigkeit gewährleistet.

Im folgenden wird anhand der Zeichnungen eine Ausführungsform der erfindungsgemäßen Vorrichtung und das erfindungsgemäße Verfahren erläutert. Dabei zeigt
- Figur 1: eine Seitenansicht eines Teiles einer erfindungsgemäßen Vorrichtung und
- Figur 2: einen Schnitt mit Blickrichtung A-B der Figur 1.

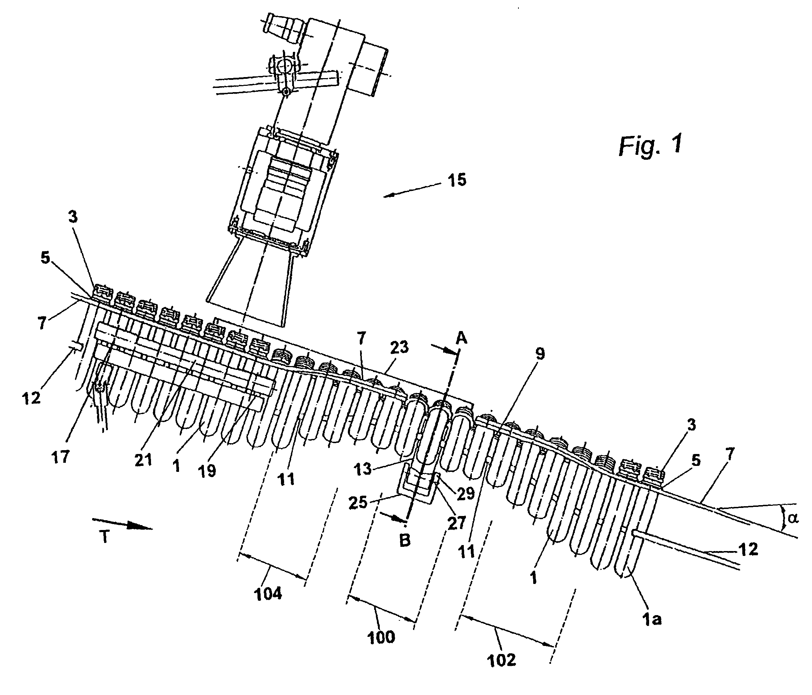

Die Figur 1 zeigt einen Ausschnitt einer in Transportrichtung geneigten Transportbahn einer erfindungsgemäßen Vorrichtung.

Diese Transportbahn befindet sich z.B. zwischen einem Speicher für Kunststoffrohlinge 1 und einer Heizstation. Im Anschluß an die Heizstation kann sich eine Blasformeinrichtung befinden. Sowohl der Speicher, die Heizstation als auch die Blasformeinrichtung können wie bekannt ausgestaltet sein und werden dementsprechend in den Figuren nicht gezeigt. Der gezeigte Ausschnitt der Transportbahn in Figur 1 umfaßt obere Führungsschienen 7 und 9, die um den Winkel α gegen die Horizontale geneigt sind, so daß die Rohlinge 1 sich von selbst rutschend fortbewegen. Die in Blickrichtung der Figur 1 hintere, obere Führungsschiene 9 ist durchgehend ausgebildet, wohingegen die vordere Führungsschiene 7 in dem Aussonderungsbereich 100 unterbrochen ist.

Die dargestellte Ausführungsform umfaßt weiterhin untere Führungsschienen 11 und 12. Wiederum ist die in Blickrichtung der Figur 1 gesehen hintere Führungsschiene 11 durchgehend, wohingegen die vordere Führungsschiene 12 unterbrochen ist.

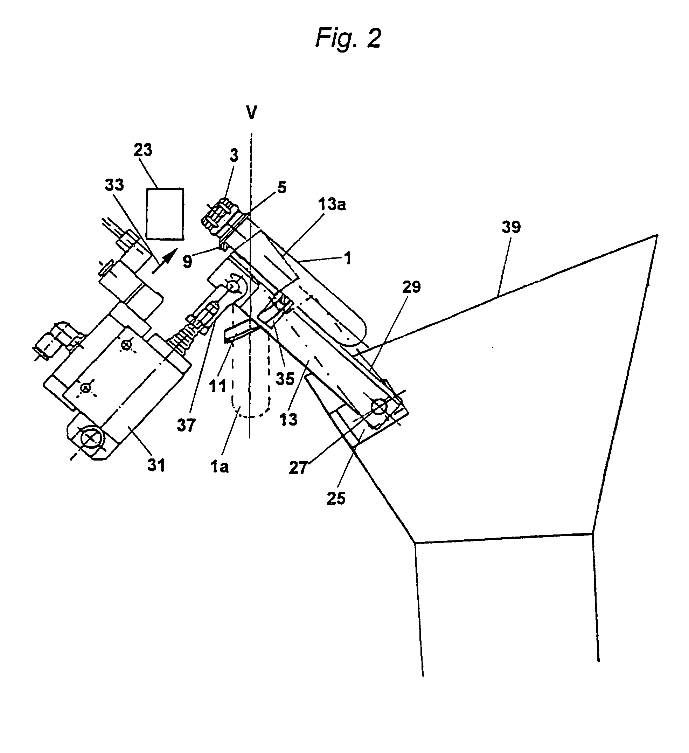

Die oberen Führungsschienen 9 und 7 verlaufen im wesentlichen parallel, so daß sich die Kunststoffrohlinge 1 mit ihrem unterhalb des Gewindes 3 liegenden Kragen 5 zwischen den oberen Führungsschienen 7 und 9 hängend bewegen. Im allgemeinen sind die unteren Führungsschienen 11 und 12 derart angeordnet, daß sie die Kunststoffrohlinge im wesentlichen in einer in der Vertikalebene V (Fig. 2) liegenden Haltung führen. Im Aufschwungbereich 104 ist die untere Führungsschiene 11 derart aus der Vertikalebene V heraus gewunden, dass sie die Kunststoffrohlinge 1 bei ihrer Bewegung in Richtung T an ihr anliegend in einer verschwenkten Haltung geführt werden. Im Aussonderungsbereich 100 wird so von den Kunststoffrohlingen 1 eine verschwenkte Haltung eingenommen, mit einem Neigungswinkel von ca. 50 Grad gegenüber der Vertikalebene V. Im Abschwungbereich 102 wird die Windung der unteren Führungsschiene 11 wieder rückgängig gemacht, so daß die Kunststoffrohlinge 1 bei ihrer weiteren Bewegung in Richtung T wieder in ihre im wesentlichen senkrechte Haltung zurückkehren.

Bei dem gezeigten Ausführungsbeispiel sind die Führungsschienen im Querschnitt im wesentlichen vierkantig. Im Aufschwungbereich 104, im Aussonderungsbereich 100 und im Abschwungbereich 102 folgen diese vierkantigen Profile der Neigung der Kunststoffrohlinge 1 auf ihrer Bahn, wie es in Figur 1 und 2 erkennbar ist.

15 bezeichnet beispielhaft eine CCD-Kamera, die vor dem Aussonderungsbereich 100 angeordnet ist. Diese CCD-Kamera 15 blickt von oben auf den Mündungsbereich der Kunststoffrohlinge 1. Die CCD-Kamera 15 bildet die Inspektionsstation. Es können noch weitere Inspektionseinrichtungen, z.B. für die Seitenflächen der Rohlinge, vorgesehen sein. Im Bereich der Inspektionsstation 15 befindet sich an den Seitenflächen der Kunststoffrohlinge 1 ein Antriebsmechanismus, der im wesentlichen aus einem Endlosriemen 21 besteht, der um eine Umlenkrolle 19 und eine Antriebsrolle 17 geführt ist. Mit dessen Hilfe läßt sich eine genau definierte Geschwindigkeit einstellen, die im Bereich der Inspektionsstation 15 vorteilhaft ist.

Eine Mehrfachlichtschranke 23 dient der Überwachung des Weges der Kunststoffrohlinge 1 von der Inspektionstation 15 zum Aussonderungsbereich 100. Die Mehrfachlichtschranke 23 ist der Übersichtlichkeit halber in den Figuren nur schematisch dargestellt und wird z.B. aus Paaren von Lichtquellen und Empfängern gebildet, die auf vorbeitransportierte Kunststoffrohlinge 1 reagieren.

Im Aussonderungsbereich 100 befindet sich das Aussonderungsmittel. Bei dem gezeigten Ausführungsbeispiel handelt es sich dabei um einen Pusher 13, der um eine Achse 27 schwenkbar gelagert ist, die in einem Lagerbock 25 gehalten wird. Der Pusher 13 hat eine prismatische Fläche 29, die der Transportbahn der Kunststoffrohlinge 1 zugewandt ist.

In der Schnittzeichnung der Figur 2 entlang der Linie A-B der Figur 1 ist dieser Pusher 13 in Transportblickrichtung zu sehen. Der Pusher 13 ist mit einem Stößel 37 verbunden, der von einem Pneumatikzylinder 31 angetrieben wird. Die Bewegungsrichtung des Stößels 37 zur Aussonderung ist mit 33 bezeichnet. 13a zeigt in strichpunktierter Andeutung die Stellung des Pushers 13 während des Aussonderns eines Kunststoffrohlinges 1.

Der Pusher 13 weist einen Schlitz 35 auf, der die untere Führungsschiene 11 umfaßt. Dieser Schlitz 35 hat solche Ausmaße, daß die untere Führungsschiene 11 der Aussonderungsbewegung nicht im Wege steht.

In der Ansicht der Figur 2 sind der Übersichtlichkeit halber nur zwei Kunststoffrohlinge 1, 1a gezeigt, die repräsentativ für die verschiedenen Stellungen der Kunststoffrohlinge entlang der Bahn sind. Während der Kunststoffrohling 1 in Figur 2 in einer Position ist, in der er ausgesondert werden könnte, ist der Kunststoffrohling 1a, der gestrichelt dargestellt ist, nicht ausgesondert worden und hat sich bereits entlang des Abschwungbereiches 102 der unteren Führungsschiene 11 weiterbewegt.

Weiterhin ist in Figur 2 ein Aussonderungsbehälter 39 gezeigt, in den ausgesonderte Kunststoffrohlinge 1 fallen.

Diese Vorrichtung arbeitet nun wie folgt:

Die Kunststoffrohlinge 1 werden automatisch in bekannter Weise aus einem Speicher auf die oberen Führungsschienen 7 und 9 gehängt. Dabei liegen sie mit ihrem Kragen 5 auf beiden, zunächst parallelen Führungsschienen auf. Durch die Neigung der Transportbahn rutschen sie in hängender Stellung zu der Inspektionsstation, die im gezeigten Beispiel von der CCD-Kamera 15 gebildet wird. Im Bereich der Kamera werden die Kunststoffrohlinge von dem Riemen 21 erfaßt, der von der Antriebsrolle 17 angetrieben wird. Der Riemen 21 bewegt die Kunststoffrohlinge 1 mit einer genau definierten Geschwindigkeit an der CCD-Kamera 15 vorbei.

Die CCD-Kamera 15, die Mehrfachlichtschranke 23 und der Pneumatikzylinder 31 sind bei der beschriebenen Ausführungsform über Signalleitungen mit einer gemeinsamen Steuerung verbunden, die in den Figuren nicht gezeigt ist. Diese Steuerung übernimmt z.B. mit Hilfe eines Mikroprozessors die Auslösung des Aussonderungsprozesses, nachdem ein von der CCD-Kamera 15 als fehlerhaft erkannter Kunststoffrohling die Mehrfachlichtschranke 23 passiert hat.

Die CCD-Kamera 15 erkennt Verletzungen, Unregelmäßigkeiten oder Fehler insbesondere im Öffnungsbereich der Kunststoffrohlinge 1. Beim Erkennen eines solchen Fehlers wird automatisch ein Signal ausgelöst. Mit Hilfe der Mehrfachlichtschranke 23 kann eine Steuerung den Weg des als fehlerhaft erkannten Kunststoffrohlinges 1 verfolgen, indem ein Zählpuls erzeugt wird, wenn dieser Kunststoffrohling 1 eine Lichtschranke passiert. Auf diese Weise kann festgestellt werden, wann der Kunststoffrohling 1, der als fehlerhaft erkannt worden ist, in den Aussonderungsbereich 100 eintritt.

Stromabwärts der Inspektionsstation 15 werden die Kunststoffrohlinge 1 von der unteren Führungsschiene 11 aus ihrer senkrechten Lage abgelenkt. Dies wird durch die verwundene Ausgestaltung der Anlageflächen der Führungsschienen 7, 9, 11 unterstützt. Die Rohlinge 1 gelangen dabei in eine verschwenkte Haltung und rollen gleichermaßen auf den in Blickrichtung der Figur 1 hinteren Führungsschienen 9 und 11 in Transportrichtung T ab.

Kommt nun ein Kunststoffrohling 1, der von der CCD-Kamera 15 als fehlerhaft erkannt worden ist, nach Passieren der Mehrfachlichtschranke 23 vor die prismatische Fläche 29 des Pushers 13, gehalten allein durch die hinteren Führungsschienen 9 und 11 in Zusammenwirkung mit der Schwerkraft, so wird ein Impuls an den Pneumatikzylinder 31 abgegeben, so daß sich der Stößel 37 in Richtung 33 bewegt. Dabei bewegt sich der Pusher 13 in die Stellung 13a (Figur 2). Die prismatische Fläche 29 stößt hierdurch gegen den auszusondernden Kunststoffrohling 1. Dieser verliert folglich den Kontakt mit der oberen Führungsschiene 9, auf der der Kragen 5 aufliegt. Der Kunststoffrohling 1 fällt dementsprechend in den Aussonderungsbehälter 39 durch die Unterbrechung der vorderen Führungsschienen 7, 12 hindurch bzw. wird durch diese hindurchgeschleudert. Der Pusher 13 kehrt nach dem Stoß in seine Ausgangsposition zurück, so daß die darauffolgenden Kunststoffrohlinge 1 nicht in ihrer Fortbewegung in Richtung T beeinflußt werden. Durch die Neigung der Transportbahn um den Winkel α zur Horizontalen, rutschen die nachfolgenden Kunststoffrohlinge 1 automatisch auf, so daß keine Lücke in der Reihe entsteht.

Die nicht ausgesonderten Kunststoffrohlinge 1 gelangen nach Passieren der Unterbrechung der vorderen Führungsschiene 7 in den Abschwungbereich 102, in dem die untere Führungsschiene 11 derart gestaltet ist, daß sie die Kunststoffrohlinge 1 aus ihrer verschwenkten Haltung zurück in die in der Vertikalebene V liegenden Haltung führt. Dies wird wiederum durch die Verwindung der oberen Anlagenflächen der Führungsschienen 7 und 9 unterstützt, die in Figur 1 und 2 zu erkennen ist. Danach werden die Kunststoffrohlinge 1 wieder durch die oberen Führungsschienen 7 und 9 sowie die unteren Führungsschienen 11 und 12 geleitet.

Wie in Figur 1 erkennbar, bewegen sich die nicht ausgesonderten Kunststoffrohlinge 1 im Anschluß an die beschriebene Aussonderungsstation weiter in ihrer in Transportrichtung T geneigten Bahn und gelangen dann zur Heizstation, wo sie erwärmt werden, um in einer darauffolgenden Blasformstation auf ihre zukünftige Form aufgeblasen werden zu können.

Die beschriebene Ausführungsform umfaßt eine obere Führungsschiene 9 und eine untere Führungsschiene 11, auf der die Kunststoffrohlinge 1 im Aufschwungbereich 104 im Aussonderungsbereich 100 und im Abschwungbereich 102 aufliegen. Abweichend von dieser Ausführungsform kann eine konvex-gekrümmte Fläche vorgesehen sein, die die geneigte Haltung der Kunststoffrohlinge 1 im Aussonderungsbereich erzeugt. Auf dieser Fläche rollen die Kunststoffrohlinge ähnlich ab, wie auf den beiden Führungsschienen 9 und 11. Bei einer solchen Ausführungsform ist der Pusher 13 in einer Lücke dieser Fläche vorgesehen, oder er greift an dem über die Fläche überstehenden Gewindebereich an, während der Kragen 5 auf der oberen Kante der Fläche aufliegt.

## Patentansprüche

1. Vorrichtung zur Herstellung von Kunststoffhohlkörpern, insbesondere streckgeblasenen Kunststoffflaschen, mit einer Transportbahn, entlang der Kunststoffrohlinge (1) in Reihe an zumindest einer Inspektionsstation (15) vorbei, zu einer Formstation zum Ausformen der Rohlinge auf eine gewünschte Form, transportiert werden, **dadurch gekennzeichnet, dass** die Transportbahn einen Aussonderungsbereich (100) aufweist , in dem die Rohlinge (1) derart geführt werden, daß sie lose an nur einer Seite unterstützt werden, und in dem ein Aussonderungsmittel (13, 31, 37) vorgesehen ist, das auf Signale der Inspektionsstation (15) hin als fehlerhaft erkannte Kunststoffrohlinge (1) aus der Reihe bewegt.

2. Vorrichtung nach Anspruch 1, **gekennzeichnet durch** eine kulissenartige Führung (9, 11), die die Kunststoffrohlinge (1) im Aussonderungsbereich (100) in verschwenkter Stellung führt.

3. Vorrichtung nach Anspruch 2, **dadurch gekennzeichnet, dass** die kulissenartige Führung (9, 11) derart ausgestaltet ist, daß die Verschwenkung der Kunststoffrohlinge (1) im Aussonderungsbereich (100) zu einer in der Transportrichtung (T) liegenden Vertikalebene (V) ca. 50° beträgt.

4. Vorrichtung nach einem der Ansprüche 2 und 3, **dadurch gekennzeichnet, dass** die Vorrichtung zur Verarbeitung von Kunststoffrohlingen (1) mit einem Kragen (5) eingesetzt wird und die kulissenartige Führung (9, 11) eine Führungskante zum Eingriff mit der unteren Seite des Kragens (5) der Kunststoffrohlinge (1) umfaßt.

5. Vorrichtung nach Anspruch 4, **dadurch gekennzeichnet, dass** die kulissenartige Führung eine Fläche umfaßt, an der die Kunststoffrohlinge im Aussonderungsbereich in verschwenkter Haltung anliegen.

6. Vorrichtung nach Anspruch 4, **dadurch gekennzeichnet, dass** die kulissenartige Führung eine erste untere Führungsschiene (11) umfaßt, die derart angeordnet ist, daß die Kunststoffrohlinge (1) mit einem vom Kragen (5) beabstandeten unteren Bereich im Aussonderungsbereich (100) der Transportbahn in verschwenkter Haltung anliegen, und die Führungskante von einer ersten oberen Führungsschiene (9) gebildet wird.

7. Vorrichtung nach einem der Ansprüche 4 bis 6, **gekennzeichnet durch** eine zweite obere Führungsschiene (7) zum Eingriff mit der der Führungskante gegenüber angeordneten unteren Seite des Kragens (5) der Kunststoffrohlinge (1), wobei die zweite obere Führungsschiene (7) zumindest im Aussonderungsbereich (100) unterbrochen ist.

8. Vorrichtung nach Anspruch 7, **gekennzeichnet durch** eine zweite untere Führungsschiene (12), auf der der ersten unteren Führungsschiene (11) gegenüberliegenden Seite der Transportbahn der Kunststoffrohlinge (1), die zumindest im Aussonderungsbereich (100) unterbrochen ist.

9. Vorrichtung nach einem der Ansprüche 4 bis 8, **dadurch gekennzeichnet, dass** die kulissenartige Führung (9, 11) derart geformt ist, daß sie die Kunststoffrohlinge (1) aus einer hängenden, im wesentlichen in einer Vertikalebene (V) liegenden Haltung vor dem Aussonderungsbereich in die verschwenkte Haltung im Aussonderungsbereich (100) bewegt, während sich die Kunststoffrohlinge entlang der kulissenartigen Führung (9, 11) bewegen.

10. Vorrichtung nach Anspruch 9, **dadurch gekennzeichnet, dass** die kulissenartige Führung (9, 11) weiterhin derart geformt ist, daß sich die Kunststoffrohlinge (1, 1a) nach dem Aussonderungsbereich (100) wieder in die hängende, im wesentlichen in der Vertikalebene (V) liegende Haltung bewegen.

11. Vorrichtung nach einem der Ansprüche 9 und 10, **dadurch gekennzeichnet, dass** die Führungsschiene oder die Führungsschienen (7, 9, 11) Anlageflächen aufweisen, an denen die Kunststoffrohlinge (1) anliegen, wobei die Anlageflächen entlang der Transportbahn derart verwunden sind, daß sie der Schwenkbewegung der Kunststoffrohlinge (1) folgen.

12. Vorrichtung nach einem der Ansprüche 4 bis 11, **dadurch gekennzeichnet, dass** die Aussonderungsmittel einen Pusher (13) umfassen, der derart ausgestaltet ist, daß er auf ein Fehlersignal der mindestens einen Inspektionsstation (15) hin einem Kunststoffrohling (1) derart einen seitlichen Stoß geben kann, daß dessen Kragen (5) außer Eingriff mit der Führungskante (9) kommt.

13. Vorrichtung nach Anspruch 12, **gekennzeichnet durch** einen Pneumatikzylinder (31), der **durch** Signale der mindestens einen Inspektionsstation (15) gesteuert wird, zum Antrieb des Pushers (13).

14. Vorrichtung nach einem der Ansprüche 12 und 13, **dadurch gekennzeichnet, dass** der Pusher (13) eine prismatische Fläche (29) umfaßt, die während des Stoßes mit dem Kunststoffrohling (1) in Eingriff kommt.

15. Vorrichtung nach einem der Ansprüche 12 bis 14, **dadurch gekennzeichnet, dass** der Pusher (13) einen um eine Schwenkachse (27) schwenkbaren Hebel umfaßt.

16. Vorrichtung nach einem der Ansprüche 1 bis 15, **dadurch gekennzeichnet, dass** die mindestens eine Inspektionsstation (15) stromaufwärts des Aussonderungsbereiches (100) angeordnet ist.

17. Vorrichtung nach Anspruch 16, **gekennzeichnet durch** eine Einrichtung (23) zur Überwachung des Weges eines von der zumindestens einen Inspektionsstation (15) als fehlerhaft erkannten Kunststoffrohlings (1) auf dessen Weg von der Inspektionsstation (15) zum Aussonderungsbereich (100).

18. Vorrichtung nach Anspruch 17, **dadurch gekennzeichnet, dass** die Einrichtung zur Überwachung eine Mehrfachlichtschranke (23) umfaßt.

19. Vorrichtung nach einem der Ansprüche 1 bis 18, **dadurch gekennzeichnet, dass** die Transportbahn in Transportrichtung geneigt ist.

20. Vorrichtung nach einem der Ansprüche 1 bis 19, **dadurch gekennzeichnet, dass** die mindestens eine Inspektionsstation eine CCD-Kamera (15) umfaßt.

21. Vorrichtung nach einem der Ansprüche 1 bis 20, **gekennzeichnet durch** eine Antriebseinrichtung (17, 19, 21) im Bereich der Inspektionsstation (15) zur Erzeugung einer definierten Geschwindigkeit der Kunststoffrohlinge (1).

22. Vorrichtung nach Anspruch 21, **dadurch gekennzeichnet, dass** die Antriebseinrichtung einen angetriebenen Riemen (21) zum Eingriff mit den Seitenflächen der Kunststoffrohlinge (1) umfaßt.

23. Vorrichtung nach einem der Ansprüche 1 bis 22, **gekennzeichnet durch** eine Auffangeinrichtung (39) zum Auffangen ausgesonderter Kunststoffrohlinge (1).

24. Verfahren zur Herstellung von Kunststoffhohlkörpern, insbesondere streckgeblasenen Kunststoffflaschen, bei dem Kunststoffrohlinge (1) entlang einer Transportbahn in einer Reihe an mindestens einer Inspektionsstation (15) vorbei zu einer Formstation zum Ausformen der Rohlinge (1) auf eine gewünschte Form transportiert werden, **dadurch gekennzeichnet, dass** die Kunststoffrohlinge (1) in einem Aussonderungsbereich (100) derart geführt werden, daß sie nur an einer Seite lose unterstützt und auf ein Fehlersignal der mindestens einen Inspektionsstation (15) hin zur Aussonderung aus der Reihe bewegt werden.

## Claims

1. Apparatus for manufacturing hollow plastic bodies, particularly stretch-blown plastic bottles, including a conveyor, along which plastic blanks (1) are transported in a row past at least one inspection station (15) to a moulding station for forming the blanks into a desired shape, **characterized in that** the conveyor has a sorting area (100) in which the blanks (1) are carried in such a way that they are loosely supported on only one side, and in which sorting means (13, 31, 37) are provided which, in response to signals from the inspection station (15), move plastic blanks identified as being defective out of the row.

2. Apparatus according to Claim 1, **characterized by** a rocker-arm type of guide (9, 11), which guides the plastic blanks (1) in the sorting area (100) into a swivelled position.

3. Apparatus according to Claim 2, **characterized in that** the rocker-arm type of guide (9, 11) is designed in such a way that the swivelling of the plastic blanks (1) in the sorting area (100) amounts to approximately 50° in relation to a vertical plane (V) lying in direction of transport (T).

4. Apparatus according to one of Claims 2 or 3, **characterized in that** the apparatus is used for processing plastic blanks (1) with a collar (5), and the rocker-arm type of guide (9, 11) comprises a guide edge for engagement with the lower side of the collar (5) of the plastic blanks (1).

5. Apparatus according to Claim 4, **characterized in that** the rocker-arm type of guide comprises a surface against which the plastic blanks rest in a swivelled position in the sorting area.

6. Apparatus according to Claim 4, **characterized in that** the rocker-arm type of guide comprises a first lower guide rail (11), which is disposed in such a way that a lower part of the plastic blanks (1), which is at a distance from the collar (5), rests in a swivelled position in the sorting area (100) of the conveyor, and the guide edge is formed by a first upper guide rail (9).

7. Apparatus according to one of Claims 4 to 6, **characterized by** a second upper guide rail (7) for engagement with the lower side of the collar (5) of the plastic blanks (1) which is located opposite the guide edge, said second upper guide rail (7) being interrupted at least in the sorting area (100).

8. Apparatus according to Claim 7, **characterized by** a second lower guide rail (12), on the side of the conveyor of the plastic blanks (1) which is located opposite the first lower guide rail (11), said second lower guide rail (12) being interrupted at least in the sorting area (100).

9. Apparatus according to one of Claims 4 to 8, **characterized in that** the rocker-arm type of guide (9, 11) is formed in such a way that it moves the plastic blanks (1) from a suspended position lying essentially in a vertical plane (V) ahead of the sorting area into the swivelled position in the sorting area (100), whilst the plastic blanks move along the rocker-arm type of guide (9, 11).

10. Apparatus according to Claim 9, **characterized in that** the rocker-arm type of guide (9, 11) is additionally formed in such a way that, after leaving the sorting area (100), the plastic blanks (1, 1a) again move into the suspended position lying essentially in the vertical plane (V).

11. Apparatus according to one of Claims 9 or 10, **characterized in that** the guide rail or the guide rails (7, 9, 11) have bearing surfaces against which the plastic blanks (1) rest, the bearing surfaces being curved along the conveyor in such a way that they follow the swivelling movement of the plastic blanks.

12. Apparatus according to one of Claims 4 to 11, **characterized in that** the sorting means comprise a pusher (13) which is designed in such a way that, in response to a defect signal from at least one inspection station (15), it can push a plastic blank (1) sideways so that its collar (5) becomes disengaged from the guide edge (9).

13. Apparatus according to Claim 12, **characterized by** a pneumatic cylinder (31), which is controlled by signals from at least one inspection station (15) for driving the pusher (13).

14. Apparatus according to one of Claims 12 or 13, **characterized in that** the pusher (13) comprises a prismatic surface (29) which, during the push, engages with the plastic blank (1).

15. Apparatus according to one of Claims 12 to 14, **characterized in that** the pusher (13) comprises a lever which swivels around a swivelling axis (27).

16. Apparatus according to one of Claims 1 to 15, **characterized in that** the inspection station (15), of which there is at least one, is located upstream of the sorting area (100).

17. Apparatus according to Claim 16, **characterized by** means (23) for monitoring the path of a plastic blank (1), identified as being defective by at least one inspection station (15), on its way from the inspection station (15) to the sorting area (100).

18. Apparatus according to Claim 17, **characterized in that** the monitoring means comprise a multiple light barrier (23).

19. Apparatus according to one of Claims 1 to 18, **characterized in that** the conveyor is inclined in direction of transport.

20. Apparatus according to one of Claims 1 to 19, **characterized in that** the inspection station, of which there is at least one, comprises a CCD camera (15).

21. Apparatus according to one of Claims 1 to 20, **characterized by** a drive mechanism (17, 19, 21) in the region of the inspection station (15) for producing a specific speed of the plastic blanks (1).

22. Apparatus according to Claim 21, **characterized in that** the drive mechanism comprises a driven belt (21) for engagement with the side faces of the plastic blanks (1).

23. Apparatus according to one of Claims 1 to 22, **characterized by** a collecting device (39) for the collection of plastic blanks (1) which have been separated out.

24. Method of manufacturing hollow plastic bodies, particularly stretch-blown plastic bottles, in which plastic blanks (1) are transported along a conveyor in a row past at least one inspection station (15) to a moulding station for forming the blanks (1) into a desired shape, **characterized in that** the plastic blanks (1) are carried in a sorting area (100) in such a way that they are loosely supported only on one side and are moved out of the row, for purposes of separating them out, in response to a defect signal from at least one inspection station (15).

## Revendications

1. Dispositif pour produire des corps creux en matière plastique, en particulier des bouteilles en matière plastique étirées par soufflage, avec une bande transporteuse le long de laquelle des ébauches en matière plastique (1) sont transportées en rangée devant au moins un poste d'inspection (15) jusqu'à un poste de formage destiné à façonner les ébauches selon une forme désirée,
**caractérisé en ce que**
la bande transporteuse présente une zone de triage (100) où les ébauches (1) sont amenées de telle manière qu'elles soient soutenues de manière lâche sur un seul côté et où il est prévu un moyen de triage (13, 31, 37) qui, sur un signal envoyé par le poste d'inspection (15), retire de la rangée les ébauches en matière plastique (1) identifiées comme défectueuses.

2. Dispositif selon la revendication 1,
**caractérisé par**
un guidage (9, 11) en forme de coulisse qui guide en position oblique les ébauches en matière plastique (1) dans la zone de triage (100).

3. Dispositif selon la revendication 2,
**caractérisé en ce que**
le guidage (9, 11) en forme de coulisse est formé de telle sorte que l'obliquité des ébauches en matière plastique (1) dans la zone de triage (100) est d'environ 50° par rapport à un plan vertical (V) situé dans la direction de transport (T).

4. Dispositif selon l'une des revendications 2 ou 3,
**caractérisé en ce que**
le dispositif est utilisé pour la transformation d'ébauches en matière plastique (1) avec un collet (5) et le guidage (9, 11) en forme de coulisse comprend une arête de guidage pour le contact avec le côté inférieur du collet (5) des ébauches en matière plastique (1).

5. Dispositif selon la revendication 4,
**caractérisé en ce que**
le guidage en forme de coulisse comprend une surface sur laquelle les ébauches en matière plastique dans la zone de triage sont disposées en posture oblique.

6. Dispositif selon la revendication 4,
**caractérisé en ce que**
le guidage en forme de coulisse comprend un premier rail de guidage (11) inférieur qui est placé de talle façon que les ébauches en matière plastique (1) s'appuient en posture oblique sur une zone inférieure à distance du collet (5) dans la zone de triage (100) de la bande transporteuse et que l'arête de guidage est formée par un premier rail de guidage (9) supérieur.

7. Dispositif selon l'une des revendications 4 à 6,
**caractérisé par**
un deuxième rail de guidage (7) supérieur pour le contact avec le côté inférieur du collet (5), placé en face de l'arête de guidage, des ébauches en matière plastique (1), le deuxième rail de guidage (7) supérieur étant interrompu au moins dans la zone de triage (100).

8. Dispositif selon la revendication 7,
**caractérisé par**
un deuxième rail de guidage (12) inférieur - placé sur le côté de la bande transporteuse des ébauches en matière plastique (1), lequel côté est en face du premier rail de guidage (11) inférieur - qui est interrompu au moins dans la zone de triage (100).

9. Dispositif selon l'une des revendications 4 à 8,
**caractérisé en ce que**
le guidage en forme de coulisse (9, 11) est formé de telle façon qu'il emporte les ébauches en matière plastique (1) depuis une posture en suspension, principalement placée dans un plan vertical (V), à l'avant de la zone de triage jusqu'à une posture oblique dans la zone de triage (100), tandis que les ébauches en matière plastique se déplacent le long du guidage (9, 11) en forme de coulisse.

10. Dispositif selon la revendication 9,
**caractérisé en ce que**
le guidage (9, 11) en forme de coulisse est de plus formé de telle sorte que les ébauches en matière plastique (1, 1a) à l'issue de la zone de triage (100) se déplacent de nouveau en posture de suspension. principalement placée dans un plan vertical (V).

11. Dispositif selon l'une des revendications 9 et 10,
**caractérisé en ce que**
le rail de guidage ou les rails de guidage (7, 9, 11) présentent des surfaces d'appui sur lesquelles les ébauches en matière plastique (1) reposent, les surfaces d'appui étant gauchies le long de la bande transporteuse de telle manière qu'elles suivent le déplacement oblique des ébauches en matière plastique (1).

12. Dispositif selon l'une des revendications 4 à 11,
**caractérisé en ce que**
les moyens de triage comprennent un pousseur (13) formé de telle façon que, sur un signal envoyé par le poste d'inspection (15) au moins au nombre d'un, il puisse donner un coup latéral à une ébauche en matière plastique (1) tel que son collet (5) ne soit plus en contact avec l'arête de guidage (9).

13. Dispositif selon la revendication 12,
**caractérisé par**
un cylindre pneumatique (31) qui est commandé par des signaux du poste d'inspection (15) au moins au nombre d'un et qui sert à actionner le pousseur (13).

14. Dispositif selon l'une des revendications 12 et 13,
**caractérisé en ce que**
le pousseur (13) comprend une surface prismatique (29) qui entre en contact avec l'ébauche en matière plastique (1) au moment du choc.

15. Dispositif selon l'une des revendications 12 à 14,
**caractérisé en ce que**
le pousseur (13) comprend un levier orientable autour d'un pivot (27).

16. Dispositif selon l'une des revendications 1 à 15,
**caractérisé en ce que**
le poste d'inspection (15), au moins unique, est placé en amont de la zone de triage (100).

17. Dispositif selon la revendication 16,
**caractérisé par**
une installation (23) destinée au contrôle du trajet d'une ébauche en matière plastique (1), identifiée comme défectueuse par le poste d'inspection (15) au moins unique, sur son trajet allant du poste d'inspection (15) à la zone de triage (100).

18. Dispositif selon la revendication 17,
**caractérisé en ce que**
l'installation destinée au contrôle comprend une barrière lumineuse. multiple (23).

19. Dispositif selon l'une des revendications 1 à 18,
**caractérisé en ce que**
la bande transporteuse est inclinée en direction de transport.

20. Dispositif selon l'une des revendications 1 à 19,
**caractérisé en ce que**
le poste d'inspection au moins unique comporte une caméra CCD (15).

21. Dispositif selon l'une des revendications 1 à 20,
**caractérisé par**
une installation d'entrainement (17, 19, 31) dans la zone du poste d'inspection (15) destinée à donner une vitesse donnée aux ébauches en matière plastique (1).

22. Dispositif selon la revendication 21,
**caractérisé en ce que**
l'installation d'entrainement comprend une courroie entrainée (21) destinée au contact avec les surfaces latérales des ébauches en matière plastique (1).

23. Dispositif selon l'une des revendications 1 à 22,
**caractérisé par**
une installation de réception (39) destinée à collecter les ébauches en matière plastique (1) rejetées.

24. Procédé pour produire des corps creux en matière plastique, en particulier des bouteilles en matière plastique étirées par soufflage, dans lequel des ébauches en matière plastique (1) sont transportées sur une bande transporteuse en rangée devant au moins un poste d'inspection (15) jusqu'à un poste de formage destiné à façonner les ébauches (1) selon une forme désirée,
**caractérisé en ce que**
les ébauches en matière plastique (1) sont amenées dans une zone de triage (100) de telle façon qu'elles soient soutenues de manière lâche sur un seul côté et que, sur un signal d'erreur envoyé par le poste d'inspection (15) au moins unique, elles soient retirées de la rangée pour être rejetées.
